# EUROPEAN PATENT SPECIFICATION

(11) **EP 1 385 898 B1**
(45) Date of publication and mention of the grant of the patent: **31.05.2006**
(21) Application number: 02734076.9
(22) Date of filing: 29.04.2002
(51) Int. Cl.: C08G 65/30, C08K 5/07, C08K 5/09

(54) **PHARMACEUTICAL COMPOSITION COMPRISING POLY(ALKYLENE OXIDES) HAVING REDUCED AMOUNTS OF FORMIC COMPOUNDS**
PHARMAZEUTISCHE ZUSAMMENSETZUNG ENTHALTEND POLYALKYLENOXIDE MIT VERRINGERTEN MENGEN AN AMEISENSÄURE UND AMEISENSÄUREDERIVATEN
COMOSITION PHARMACEUTIQUE CONTENANT DE POLY(ALKYLENE OXYDES) PRESENTANT DES QUANTITES REDUITES DE COMPOSES FORMIQUES

(30) Priority: 01.05.2001 US 287885 P
(43) Date of publication of application: 04.02.2004
(73) Proprietor: UNION CARBIDE CHEMICALS & PLASTICS TECHNOLOGY CORPORATION, Danbury, Connecticut 06817-0001 (US)
(72) Inventor: FAN, You-Ling, Warren, NJ 07059 (US)
(74) Representative: Raynor, John
(86) International application number: PCT/US2002/013444
(87) International publication number: WO 2002/088217

(56) References cited:
- EP-A- 0 514 870
- WO-A-00/78841
- US-A- 2 941 963
- US-A- 3 167 519

## Description

### Field of the Invention

The present invention relates to poly(alkylene oxide) polymers and more specifically to poly(alkylene oxide) polymers having reduced amounts of formic compounds.

### Background of the Invention

Poly(alkylene oxide) polymers, e.g., polyethylene oxide, have been used commercially for a variety of applications. For example, poly(alkylene oxide) polymers are used in industrial applications, such as, for example, paper fines retention, waste water treatment, flocculation, lubrication, adhesives manufacture, and underground mining operations, as well as pharmaceutical and personal care applications, such as, for example, as drug delivery vehicles and in cosmetics, e.g., shampoos, conditioners, skin creams, lotions, soaps and the like.

Poly(alkylene oxide) polymers are sold in a wide range of molecular weights ranging, for example, from about 100,000 g/gmole to 10,000,000 g/gmole. For certain applications, e.g., pharmaceutical applications, poly(alkylene oxide) polymers in a lower molecular weight range, e.g., from about 100,000 to 2,000,000 g/gmole, are often desired. Commercial production processes for the manufacture of poly(alkylene oxide) polymers produce products typically having a molecular weight of about 4,000,000 g/gmole or higher. Typically, these higher molecular weight poly(alkylene oxide) polymer products are irradiated in the presence of oxygen with a suitable irradiation source, such as, for example, gamma rays from a ⁶⁰Co source or a electron beam from a Vandegraaff Generator. The details of such irradiation processes are known to those skilled in the art. As a result of the irradiation, various oxidation by-products are produced, such as, for example, hemiformal groups (ROCH₂OH) and formate groups (ROCHO) attached to the ends of polymer chains ("R"), as well as various volatile oxidation products, such as, for example, formaldehyde, carbon dioxide, carbon monoxide, ethylene glycol, glycol aldehyde and mono and diformates of ethylene glycol. See, for example, Radiation Induced Oxidation Of Solid Polyethylene Oxide, Christian Decker, Journal of Polymer Science, Vol. 15, 781-798 and Vol. 15, 799-813, John Wiley & Sons, Inc (1977).

In accordance with the present invention, it has been found that the oxidation by-products which are comprised of formic compounds, e.g., formic acid and esters and salts thereof, can impart undesirable characteristics to the poly(alkylene oxide) polymers in particular for pharmaceutical applications. It would be desirable to provide poly(alkylene oxide) polymers having reduced amounts of oxidation by-products resulting from irradiation of the polymers, particularly formic compounds.

### Summary of the Invention

In a first aspect of the present invention, there is provided a pharmaceutical composition, comprising particles of a polymer polymerized from an alkylene oxide monomer; and a drug containing amine functionality, wherein the said polymer has a weight average molecular weight of from 100,000 to 2, 000, 000 g/gmole, and is produced by
(i) polymerizing an alkylene oxide monomer to produce a polymer product, and thereafter irradiating the polymer product in the presence of oxygen to reduce its molecular weight, thereby producing particles of polymer having a weight average molecular weight of from 100,000 to 2,000,000 g/gmole and containing a formic compound;
(ii) contacting the product of step (i) with a treatment acid having a Pka lower than the Pka of formic acid, to reduce the amount of the formic compound to a level of less than 200 ppmw of the formic compound based on the total weight of the particle. Quite surprisingly in accordance with the present invention, it has been found that by removing the formic compounds which are free, i.e., not chemically bonded to the poly(alkylene oxide) chain, can significantly improve the characteristics of the poly(alkylene oxide) polymers.

By virtue of the present invention, it is now possible to treat poly(alkylene oxide) polymers which have been subjected to irradiation in order to reduce the amount of formic compounds. In accordance with the present invention, the poly(alkylene oxide) polymers are contacted with a treatment acid having Pka lower than that of formic acid to replace the formic compounds with the treatment acid.

### Detailed Description of the Invention

The poly(alkylene oxide) polymers suitable for use in accordance with the present invention comprise polymers of alkylene oxides containing from 1 to about 4 carbon atoms per molecule, e.g., ethylene oxide or propylene oxide, as well as copolymers and derivatives thereof.

Preferably, the poly(alkylene oxide) polymers of the present invention are ethylene oxide polymers. The ethylene oxide polymers include, for example, homopolymers of ethylene oxide and copolymers of ethylene oxide with one or more polymerizable comonomers, usually olefin oxide comonomers. The particular comonomer, when used in accordance with the present invention, is not critical and may contain hydrocarbon substituents such as alkyl, cycloalkyl, aromatic, alkene and branched alkyl groups. However, the amount of comonomer, e.g., 1,2-propylene oxide, must not exceed that which would cause the poly(ethylene oxide) to become insoluble in water. Typical olefin oxide comonomers include 1,2-propylene oxide, 2,3-butylene oxide, 1,2-butylene oxide, styrene oxide, 2,3-epoxy hexane, 1,2-epoxy octane, butadiene monoxide, cyclohexene monoxide, epichlorohydrin, and the like.

Commercial processes for manufacturing poly(alkylene oxide) polymers typically employ a catalyst, or combination of catalysts, which is consumed in the polymerization. One catalyst comprises a reaction product of calcium and ammonia. Catalysts of this type are further described in U.S. Patent Nos. 4,193,892 and 4,267,309 issued to Goeke, et al., and U.S. Patent No. 4,667,013 issued to Reichle. Another catalyst comprises an organo zinc compound such as, for example, diethyl zinc, e.g., diethyl zinc and water or an alcohol. Catalysts of this type are further described for example, in U.S. Patent No. 5,326,852, issued to Masato et al. and Japanese Patent Nos. JP 46007709, JP 45007751 and JP 5302731. Still another catalyst is an aluminum-based catalyst, known as Vandenberg catalysts. Catalysts of this type are further described for example, in U.S. Patent Nos. 3,135,705, 3,219,591 and 3,403,114 issued to E.J. Vandenberg et al. Further details concerning suitable catalysts are known to those skilled in the art.

Further details concerning the preparation of poly(alkylene oxide) polymers of the present invention are known to those skilled in the art and disclosed in the literature; see, for example, U.S. Patent Nos. 2,969,403, issued to Helmut, et al.; 3,037,943, issued to Bailey, et al.; 3,167,519, issued to Bailey, et al.; 4,193,892, issued to Geoke, et al.; and 4,267,309, issued to Geoke, et al. Moreover, the polymers can be prepared using conventional apparatus known to those skilled in the art.

The poly(alkylene oxide) polymers which have been irradiated to reduce the molecular weight have a weight average molecular weight greater than about 100,000 to 2,000,000, preferably from about 100,000 to 1,000,000 and often from about 300,000 to 1,000,000 grams per gram mole ("g/gmole"). Techniques for determining the weight average molecular weight of poly(alkylene oxide) polymers are known to those skilled in the art. One such technique is gel permeation chromatography. As noted above, irradiation processes suitable to reduce the molecular weight of poly(alkylene oxide) polymers are known to those skilled in the art, and such processes are not critical to the present invention.

Preferably, the poly(alkylene oxide) polymers of the present invention are water-soluble. As used herein, the term "water-soluble" means that at least 0.1 gram and preferably at least 1 gram of the poly(alkylene oxide) are soluble in 100 grams of distilled water at 25° at one atmosphere. Techniques for varying the water solubility of poly(alkylene oxide) polymers are known to those skilled in the art.

The particular physical form of the poly(alkylene oxide) polymers is not critical to the present invention. Typically, the physical form selected from tablets, pellets, powder, granules or extrudates.

In powder form, the particle size of the poly(alkylene oxide) polymers is typically from less than about 40 to 2000 microns, preferably with less than about 65 percent of the particles having a particle size greater than about 150 microns. A convenient way to measure the particle size of the polymer is to use sieves corresponding to standard mesh sizes. Sieves having the mesh values corresponding to the U.S. Standard Sieve and Tyler Equivalents, Table 21-12, CHEMICAL ENGINEERS HANDBOOK, Perry and Chilton, 5th Edition, McGraw-Hill Book Company are suitable for use herein.

When in the form of granules, i.e., a large particle comprising a composite of numerous smaller particles, tablets or pellets, the particle size is typically from about 0.1 to 5 millimeters. When in the form of extrudates, the poly(alkylene oxide) polymer particles have an average diameter of from about 2 to 10 millimeters. When in granular, tablet, pellet or extrudate form, the particles may comprise other polymers or materials in addition to the poly(alkylene oxide) polymer.

Further details concerning the processes and equipment suitable for manufacturing the poly(alkylene oxide) polymer particles of the present invention, e.g., in the form of powder, pellets, granules, tablets or extrudates, are known to those skilled in the art.

As used herein, the term "formic compound" means any compound or group within a compound or polymer which has a formic acid group or salt or ester thereof. Typically, the amount of the formic compound in the poly(alkylene oxide) starting materials of the present invention is from about 200 to 2,000 ppmw, more typically from about 300 to 1,500 ppmw, based on the total weight of the polymer. Preferably, the formic compounds which are treated in accordance with the present invention are those which are free, i.e., not chemically bonded to the poly(alkylene oxide) chain. Examples of such free formic compounds include formic acid, calcium formate, sodium formate, methyl formate, isopropyl formate and ethylene glycol formate. For poly(ethylene oxide) polymers produced in basic pH, such as POLYOX® produced by The Dow Chemical Company of Midland, MI, The free formic compounds are also referred to herein as "inorganic formates".

In accordance with the present invention, the poly(alkylene oxide) polymer particles comprising the formic compound are treated in order to reduce the amount of the formic compound, particularly on or near the surface of the polymer particle, by contacting the surface of the particle with an acid, i.e., a treatment acid, having a Pka lower than the Pka of formic acid, i.e., 3.75. Thus, the treatment acid can release the formic acid from the formic compound in the polymer particle. The Pka is a measurement of the completeness of an incomplete chemical reaction. It is defined as the negative logarithm (to the base 10) of an equilibrium constant ("K") for the reaction in question. Further details concerning the Pka of weak acids and the measurement thereof, are known to those skilled in the art. Preferred treatment acids are selected from the group consisting of hydrofluoric acid (Pka = 3.14), sulfuric acid (Pka = 0.4), nitric acid, thiosurfuric acid (Pka = 2.00), phosphoric acid (Pka = 2.12), citraconic acid (Pka = 2.48), citric acid (Pka = 3.06), dichloroacetic acid (Pka = 1.30), oxalic acid (Pka =1.19), methanesulfonic acid (Pka < 3.75), malonic acid (Pka = 2.85) and mixtures thereof.

The particular method of treating the poly(alkylene oxide) polymer with the treatment acid is not critical to the present invention.

In one aspect of the invention, the process comprises (i) forming a slurry of the polymer particle in a liquid medium comprising the treatment acid under conditions effective to promote the extraction of the formic compound from the polymer particle; and (ii) recovering a treated polymer particle having a reduced amount of the formic compound. In this aspect of the invention, the liquid medium is preferably a non-solvent for the poly(alkylene oxide) polymer. Preferred non-solvents include any inert organic solvents which are at least partially miscible with water. Examples of useful organic solvents include alcohols, ketones, glycol ethers, hydroxyl esters, alkyl pyrolidones, toluene, isopentane, tetrahydrofuran, dioxanes, chlorinated solvents, and ethers. The preferred solvents include acetone, methyl ethyl ketone, and isopropyl alcohol. The amount of liquid medium used in comparison to the poly(alkylene oxide) is not critical. However, it is convenient to use a liquid medium to polymer ratio from about 100 to about 2000 milliliters ("ml") of liquid medium per 100 gram of poly(alkylene oxide), preferably from 200 to 1000 ml per 100 gram of poly(alkylene oxide).

The acid concentration has a direct effect on the efficacy of the extraction process. Usually, the higher the acid concentration the more efficient the extraction process. Preferred acid concentrations that are useful for the purpose of the present invention range from about 1 to 1000 millimoles("mM") of acid per 100 gram poly(alkylene oxide) and more preferably from about 50 to 500 mM/100 gram poly(alkylene oxide). It is also preferred to include a sufficient amount of water to swell or partially solubilize the polymer to enhance the efficiency of the replacement of the formic compound with the treatment acid. The amount of water may typically vary from about 0.01 to 25 gram of water per 100 gram of poly(alkylene oxide) with the proviso that the amount is large enough to enhance the extraction process while not too large to cause unwanted agglomeration of the polymer particles. The preferred water charge ranges from about 0.1 to 5 gram per 100 gram of poly(alkylene oxide).

The extraction process is typically carried out at ambient temperature and pressure, e.g., 25°C and 1 atm. However, the preferred temperature is between 20 and 50°C such that it is below the melting point of the polymer. If the reaction is carried out at a temperature too close to, or over, the melting point of the polymer, agglomeration of the polymer particles may result. The extraction time is not critical and may typically vary from 1 minute up to 24 hours. The preferred extraction time is from about 30 minutes to about 3 hours. The extraction process is preferably carried out in either a stainless steel vessel, a glass-lined steel vessel, or a glass or ceramic vessel.

After the extraction step, the polymer is filtered and dried. Filtration of the polymer, after extraction, from the liquid medium may be accomplished by means known to those skilled in the art, e.g., by using either a filter or a centrifuge. The drying operation may be carried out, for example, using either a forced air oven or a vacuum oven. The temperature of such an oven must be carefully controlled to below the melting point of the polymer in order to minimize the risk of polymer agglomeration during drying. The preferred drying operation is to dry the polymer under vacuum under a stream of nitrogen at a temperature about 15°C below the melting point of the polymer. The dried polymer should be free-flowing particles similar to its precussor. Certain additives such as antioxidant, pigment, dye, lubricant, flowing aid, or filler may be added to the dried product if so desired.

While any suitable equipment for washing, filtration, centrifugation, vacuum drying, drying, and mixing may be used for the purpose of conducting the extraction process of this invention, a Nutsche Filter(or its equivalent, such as, for example, a Zwag Filter or a Rosenmund Filter) may be particularly useful. When a Nutsche Filter is used, the extraction and filtration process may be conducted in the same apparatus. As a result, the need for material transferring and the need for equipment cleaning are minimized. Additionally, because the operations are carried out in a single apparatus, contamination by foreign materials is also minimized.

In another aspect of the invention, the process comprises (i) applying a sufficient amount of the treatment acid to the surface of the polymer particle to promote the replacement of the formic compound on the surface with the treatment acid; and (ii) removing the replaced formic compound from the particle.

In this aspect of the invention a sufficient quantity of the treatment acid is applied to the surface of the polymer particle, e.g., by spraying in order to promote the exchange of the treatment acid with the formic compound. Thereafter, the formic compound is removed from the polymer particle through evaporation, e.g., by heating in an oven as described above, e.g., at a temperature of at least about 15° C less than the melting point of the polymer.

In another aspect of the invention, the extraction may be conducted in a homogeneous system. In this aspect, the poly(alkylene oxide) is dissolved in a suitable solvent such as water and contacted with the treatment acid. The contacting of the polymer with the treatment acid can be accomplished by adding an aqueous solution of the treatment acid to the solution of the dissolved polymer. The solution is allowed to stand or is mixed for a short duration which can be determined by one skilled in the art. The polymer is recovered by coagulation in a nonsolvent such as acetone or isopropyl alcohol. The coagulated polymer is preferably rinsed with an additional amount of nonsolvent, collected by filtration, and dried. The homogeneous process described above is preferred when it is desired to reduce the formic compound to a lower level than the slurry process described above.

After removal of the formic compound in accordance with the present invention, the average concentration of the formic compound in the particle is less than about 200 ppmw, preferably from about 10 to 150 ppmw, more preferably below 120 ppmw and most preferably below 100 ppmw, based on the total weight of the particle. It is preferred that once treated polymer be stabilized by a suitable antioxidant or a mixture of antioxidants, the details of which are known to those skilled in the art. Examples of such antioxidants include butylated hydroxytoluene and Vitamin E.

In one aspect of the invention, the product produced is a particle (i) a polymer polymerized from an alkylene oxide monomer; and (ii) a formic compound; said particle having center portion and an outer surface and further having a concentration gradient of the formic compound wherein a higher concentration of the formic compound thereof is present in the center portion than at the outer surface. It is preferred that the concentration gradient has less than about 5 wt.% of the formic compound present in the outer most 10% of the particle along a radial cross-section of the particle beginning in the center of the particle and ending at its surface.

The product produced by the acid-treatment process of this invention may have either an acidic, basic, or neutral pH depending on the product treatment after the acid-washing step. For certain pharmaceutical applications, it is advantageous to leave a sufficient amount of acid in the product to give it an acidic pH.

The poly(alkylene oxide) polymers produced in accordance with the present invention have a variety of end uses. Typical end uses include, for example, thickener for latex paints, an excipient for the delivery of drugs, such as in the controlled-release of drugs in pharmaceutical applications, personal care applications, filler retention and drainage aid in paper manufacture, lubricant for safety razors, binder for ceramics, water-soluble seed tapes, concrete pumping aid and flocculant for the mining industry.

Often, the poly(alkylene oxide) polymers will be combined with an active ingredient. As used herein, the term "active ingredient" includes, but is not limited to, drugs or therapeutic agents, such as, for example, spermicides, virucides, analgesics, anesthetics, antibiotic agents, antibacterial agents, antiseptic agents, vitamins, corticosteroids, antifungal agents, vasodilators, hormones, antihistamines, autacoids, kerolytic agents, anti-diarrhea agents, anti-alopecia agents, anti-inflammatory agents, glaucoma agents, dry-eye compositions, wound healing agents, anti-infection agents, and the like, as well as solvents, diluents and adjuvants such as, for example, water, ethyl alcohol, isopropyl alcohol, higher alcohols, glycerine, propylene glycol, sorbitol, preservatives, surfactants, menthol, eucalyptus oil, other essential oils, fragrances, viscosity adjusters and the like. Such active ingredients are commercially available and known to those skilled in the art.

The amount of the poly(alkylene oxide) polymers and active agents will vary depending upon the end use composition. Typically, however, the composition will comprise from about 0.1 to 99.9 weight percent of the poly(alkylene oxide) polymer and from 99.9 weight percent of the active ingredient. Those skilled in the art can determine the appropriate amount of the respective components depending on the end use. For example, drugs may be used in small amounts ranging from 0.1 weight percent or less to 10.0 weight percent or more, for example, based on the total weight of the composition. Often, the concentration of the poly(alkylene oxide) polymer in the drug delivery composition will range from about 0.5 to 50 weight percent, and more often from about 0.5 to 10 weight percent based on the total weight of the composition.

Typical cleansing systems may contain water and a surfactant, like ammonium lauryl sulfate and ammonium laureth sulfate and, auxillary surfacts like lauramide DEA or coco betaines, thickening agents like NaCl, hydroxypropyl cellulose or PEG-120 methyl glucose dioleate, pH adjusters like citric acid or triethylamine and a chelating agent like tetrasodium EDTA. Likewise, bar soaps may contain surfactants like tallowate or cocoate and a feel modifier like glycerin.

Typical areosol and non-areosol hairsprays may contain a solvent like a low molecular weight alcohol and, or water, a propellent like dimethylether or a hydrocarbon, a resin like poly(vinylpyrrolidone)/vinyl acetate copolymer and, or poly(vinylmethacrylate)/methacrylate copolymer, a plasticizer like dimethicone copolyol and a neutralizing agent like aminomethyl propanol.

Typical creams may contain an oil like mineral oil, water, an emulsifier like methyl glucose sesquistearate or PEG-20 methyl glucose sesquistearate, a feel modifier like isopropyl palmitate or PEG-20 methyl glucose distearate, a polyhydridic alcohol like methyl gluceth-20 and a stabilizer like carbomer.

Typical mousses may contain a solvent like water and, or alcohol, a surfactant like oleth-10, a feel modifier like isopropyl palmitate and a resin like polyquaternium-10 or poly(vinylmethacrylate)/methacrylate copolymer.

Typical gels may contain a viscosifying agent like carbomer, a solvent like water and, or alcohol, a styling resin like poly(vinylmethacrylate)/vinylmethacrylate copolymer, a neutralizing agent like aminomethyl propanol and a feel modifier like methyl gluceth-20.

Often, drugs suitable for use with the poly(alkylene oxide) polymers of the present invention are compounds which contain amine functionality. Examples of amine-containing drugs which have primary or secondary amines include; enalapril maleate, famotidine, metformin hydrochloride, nifedipine, buspirone hydrochloride, glipizide, bupropion hydrochloride, omeprazole, fluoxetine hydrochloride, lisinopril, lovastatin, lisinopril, isotretinoin, amoxicillin + clavulanate, interferon □2b, imipenem and cilastatin, tamoxifen citrate, nabumetone, nizatidine, alprazolam, ciprofloxacin hydrochloride, clarithromycin, fluticasone propionate, doxazosin mesylate, benazepril hydrochloride, fluticasone, nefazodone hydrochloride, tolcapone, tolterodine tartrate, isradipine, naratriptan hydrochloride, candesartan cilexetil, paclitaxel, fluconazole, recombinant DNA HepB, carboplatin, bupropion hydrochloride, simvastatin, sertraline hydrochloride, paroxetine hydrochloride, pravastatin sodium, Azithromycin, ondansetron hydrochloride, goserelin acetate, sumatriptan succinate, amlodipine besylate, cetirizine hydrochloride, losartan potassium, losartan potassium - hydrochlorothiazide, atorvastatin calcium, Olanzapine, and Ioratadine.

Typically, the composition comprises from about 0.1 to 10.0 wt. % of the compound having an amine functionality, based on the total weight of the composition. The composition can be present in any suitable dosage form, such as a solid, e.g., tablet, capsule or patch, a liquid, or be coated on a medical device, e.g., a catheter.

The invention is hereafter described with respect to the examples which are not intended to limit the scope of the claims which follow.

### Example 1

A slurry containing 70 g ofPOLYOX® WSR N80 NF( a poly(ethylene oxide) having a molecular weight of 300,000 produced by Union Carbide of Danbury, CT), 20 ml of hydrochloric acid(37%), and 480 ml of isopropyl alcohol(IPA) was stirred at room temperature for 60 minutes. The polymer was collected by filtration using a vacuum filter. The filter cake was washed with 100 ml of isopropyl alcohol ("IPA") two times and followed by a final rinse with 100 ml of acetone. The washed polymer was then collected and dried at 30°C under vacuum. The finished polymer was a free-flowing solid. The inorganic formate in the polymer was analyzed with an Ion Chromatography ("IC") instrument and the value was found to be 150 ppmw. The unwashed poly(ethylene oxide) had an inorganic formate level over 500 ppmw.

### Example 2

Example 1 was repeated with the exception that the hydrochloric acid was replaced with 5g of nitric acid (69.7%) and 15g of distilled water was added. The IPA rinse was done 3 times and followed by a final acetone rinse. The vacuum drying was conducted at 40°C instead of 30°C. The finished polymer was a free-flowing solid. IC analysis showed the inorganic formate level was reduced from over 500 ppmw to 130 ppmw.

### Example 3

Example 2 was repeated with the exception that the nitric acid was replaced with 4g of phosphoric acid (85%) and 16g of distilled water was added. Vacuum drying was conducted at 30°C over a weekend. The finished polymer was a free-flowing solid. IC analysis showed an inorganic formate reduction of from over 500 ppmw to 170 ppmw.

### Example 4

A slurry containing 100g of the poly(ethylene oxide) used in Example 1, 21.75g of methanesulfonic acid (99.5%) and 19g of distilled water is stirred at room temperature for 2 hours. The polymer was collected by vacuum filtration, rinsed twice with 70 ml of IPA. The polymer was then dried at 40°C under vacuum over a weekend. The finished polymer was a free-flowing solid. IC analysis showed an inorganic formate level of 48 ppmw. The unwashed poly(ethylene oxide) had a inorganic formate level of over 500 ppmw.

### Example 5

Example 4 is repeated with the exception that the anhydrous methanesulfonic acid was replaced with 20.6g of an aqueous methanesulfonic acid (70%) and 8.2g of distilled water. The finished polymer was a free-flowing solid. IC analysis showed an inorganic formate content of 48 ppmw. The unwashed poly(ethylene oxide) had an inorganic formate level of over 500 ppmw.

### Example 6

Example 4 was repeated with the exception that no distilled water was added to the slurry. The finished polymer had an inorganic formate level of 96 ppmw. The unwashed poly(ethylene oxide) had an inorganic formate level of over 500 ppmw.

### Example 7

A slurry containing 52g of POLYOX WSR N80NF, 20ml of hydrofluoric acid (49%), and 480 ml of IPA was mixed in a polypropylene beaker under nitrogen for 30 minutes. The polymer was collected by filtration under vacuum, and re-slurried in a fresh solution having the same composition as described above in this example for another 30 minutes. The polymer was collected by filtration under vacuum, rinsed twice with 100 ml of IPA, and followed by another rinse with acetone. The polymer was then dried under vacuum at RT for overnight. The dried polymer was blended with 19 mg of BHT. A free-flowing polymer was obtained.

### Example 8

A series of experiments was carried out using POLYOX WSR N80NF and acidic solutions containing different ratios of methansulfonic acid (MSA) and distilled water in IPA for different lengths of washing time. The level of inorganic formate in the POLYOX WSR N80NF starting material was 471 ppmw. The formulations, washing conditions, and the level of inorganic formate found in the finished polymers are complied in the following table:

| MSA,g (70%) | IPA,g | Water,g | Washing Time,hr | Inorganic Formate, ppm |
|---|---|---|---|---|
| 10.3 | 275.1 | 4.1 | 0.5 | 114 |
| 41.2 | 275.1 | 4.1 | 0.5 | 88 |
| 10.3 | 825.3 | 12.5 | 0.5 | 100 |
| 41.2 | 825.3 | 12.5 | 0.5 | 80 |
| 10.3 | 825.3 | 12.5 | 4 | 80 |
| 41.2 | 825/3 | 12.5 | 4 | 31 |
| 41.2 | 275.1 | 4.1 | 4 | 27 |
| 10.3 | 275.1 | 4.1 | 4 | 48 |
| 25.75 | 550.2 | 8.32 | 2.25 | 83 |

Those skilled in the art will recognize that other aspects of the invention in addition to the ones specifically described herein are intended to be included within the scope of the following claims.

## Claims

1. A pharmaceutical composition, comprising particles of a polymer polymerized from an alkylene oxide monomer; and a drug containing amine functionality, wherein the said polymer has a weight average molecular weight of from 100,000 to 2,000,000 g/gmole, and is produced by
(i) polymerizing an alkylene oxide monomer to produce a polymer product, and thereafter irradiating the polymer product in the presence of oxygen to reduce its molecular weight, thereby producing particles of polymer having a weight average molecular weight of from 100,000 to 2,000,000 g/gmole and containing a formic compound;
(ii) contacting the product of step (i) with a treatment acid having a Pka lower than the Pka of formic acid, to reduce the amount of the formic compound to a level of less than 200 ppmw of the formic compound based on the total weight of the particle.

2. A composition as claimed in Claim 1 wherein the alkylene oxide monomer is ethylene oxide.

3. A composition as claimed in Claim 2 wherein the polymer is polymerized from ethylene oxide and one or more alkylene oxides other than ethylene oxide.

4. A composition as claimed in any one of the preceding claims, wherein the particles is in a form selected from powders, tablets, pellets, granules and extrudates.

5. A composition as claimed in any one of the preceding claims, wherein the powders have an average particle size of less than 40 to 1000 microns.

6. A composition as claimed in Claim 1 wherein the particles are extrudates having an average diameter of from 2 to 10 millimeters.

7. A composition as claimed in any one of the preceding claims, wherein the polymer has a weight average molecular weight of from 100,000 to 1,000,000 g/gmole.

8. A composition as claimed in Claim 7, wherein the polymer has a weight average molecular weight of from 300,000 to 1,000,000 g/gmole.

9. A composition as claimed in any one of the preceding claims, which comprises from about 10 to 150 ppmw of the formic compound, based on the total weight of the particle.

10. A composition as claimed in any one of the preceding claims, wherein the acid is selected hydrofluoric acid, sulfuric acid, nitric acid, thiosulfuric acid, phosphoric acid, citraconic acid, citric acid, dichloroacetic acid, oxalic acid, methanesulfonic acid, malonic acid and mixtures thereof.

11. A composition as claimed in Claim 10 wherein the acid is methane sulfonic acid.

12. A composition as claimed any one of the preceding claims, wherein acid treatment is carried out by forming a slurry of the polymer particle in a liquid medium comprising the treatment acid under conditions effective to promote the extraction of the formic compound from the polymer particle; and (ii) recovering a treated particulate polymer particle having a reduced amount of the formic compound.

13. A composition as claimed Claims 1, wherein acid treatment is carried out by applying a sufficient amount of the treatment acid to the surface of the polymer particle to promote the replacement of the formic compound on the surface with the treatment acid; and (ii) removing the replaced formic compound from the particle.

## Patentansprüche

1. Pharmazeutische Zusammensetzung, umfassend Partikel eines Polymers, welches aus einem Alkylenoxid-Monomer polymerisiert ist, und ein Arzneimittel mit einer Aminfunktionalität, worin das Polymer ein Gewichtsmittel-Molekulargewicht von 100 000 bis 2 000 000 g/gmol aufweist, und hergestellt ist durch
(i) Polymerisieren eines Alkylenoxid-Monomers, um ein Polymerprodukt herzustellen, und danach Bestrahlen des Polymerprodukts in Gegenwart von Sauerstoff, um das Molekulargewicht zu verringern, wobei Partikel des Polymers hergestellt werden mit einem Gewichtsmittel-Molekulargewicht von 100 000 bis 2 000 000 g/gmol, und welche eine Ameisensäureverbindung enthalten,
(ii) Inkontaktbringen des Produkts aus Schritt (i) mit einer Bearbeitungssäure mit einem pKa, welcher niedriger ist als der pKa von Ameisensäure, um die Menge der Ameisensäureverbindung auf eine Menge von weniger als 200 ppmw der Ameisensäureverbindung zu verringern, bezogen auf das Gesamtgewicht des Partikels.

2. Zusammensetzung nach Anspruch 1, worin das Alkylenoxid-Monomer Ethylenoxid ist.

3. Zusammensetzung nach Anspruch 2, worin das Polymer aus Ethylenoxid und einem oder mehreren Alkylenoxiden, welche andere sind als Ethylenoxid, poylmerisiert ist.

4. Zusammensetzung nach einem der vorhergehenden Ansprüche, worin die Partikel in einer Form vorliegen, welche ausgewählt ist aus Pulvern, Tabletten, Pellets, Granulaten und Extrudaten.

5. Zusammensetzung nach einem der vorhergehenden Ansprüche, worin die Pulver eine durchschnittliche Partikelgröße von weniger als 40 bis 1 000 Mikrometer aufweisen.

6. Zusammensetzung nach Anspruch 1, worin die Partikel Extrudate mit einem durchschnittlichen Durchmesser von 2 bis 10 Millimeter sind.

7. Zusammensetzung nach einem der vorhergehenden Ansprüche, worin das Polymer ein Gewichtsmittel-Molekulargewicht von 100 000 bis 1 000 000 g/gmol aufweist.

8. Zusammensetzung nach Anspruch 7, worin das Polymer ein Gewichtsmittel-Molekulargewicht von 300 000 bis 1 000 000 g/gmol aufweist.

9. Zusammensetzung nach einem der vorhergehenden Ansprüche, welche von etwa 10 bis 150 ppmw der Ameisensäureverbindung umfasst, bezogen auf das Gesamtgewicht des Partikels.

10. Zusammensetzung nach einem der vorhergehenden Ansprüche, worin die Säure ausgewählt ist aus Fluorwasserstoffsäure, Schwefelsäure, Salpetersäure, Thioschwefelsäure, Phosphorsäure, Citraconsäure, Citronensäure, Dichloressigsäure, Oxalsäure, Methansulfonsäure, Malonsäure und Gemischen davon.

11. Zusammensetzung nach Anspruch 10, worin die Säure Methansulfonsäure ist.

12. Zusammensetzung nach einem der vorhergehenden Ansprüche, worin die Säurebehandlung durchgeführt wird durch Bilden einer Aufschlämmung des Polymerpartikels in einem flüssigen Medium, welches die Bearbeitungssäure umfasst, unter Bedingungen, welche wirksam sind, die Extraktion der der Ameisensäureverbindung aus dem Polymerpartikel zu fördern, und
(ii) Rückgewinnen eines behandelten partikulären Polymerpartikels mit einer verringerten Menge der Ameisensäureverbindung.

13. Zusammensetzung nach Anspruch 1, worin die Säurebehandlung durchgeführt wird durch Auftragen einer ausreichenden Menge der Bearbeitungssäure auf die Oberfläche des Polymerpartikels, um den Austausch der Ameisensäureverbindung auf der Oberfläche mit der Bearbeitungssäure zu fördern, und
(ii) Entfernen der ausgetauschten Ameisensäureverbindung von dem Partikel.

## Revendications

1. Composition pharmaceutique, comprenant des particules de polymère d'un monomère oxyde d'alkylène ; et un médicament contenant une fonction amine, **caractérisée en ce que** ledit polymère a une masse molaire moyenne en poids de 100.000 à 2.000.000 g/molécule gramme, et est produite par
(i) la polymérisation d'un monomère oxyde d'alkylène pour produire un produit polymère, et ensuite irradiation du produit polymère en présence d'oxygène pour réduire sa masse molaire, en produisant de ce fait des particules de polymère ayant une masse molaire moyenne en poids de 100.000 à 2.000.000 g/molécule gramme et contenant un composé formique ;
(ii) la mise en contact du produit de l'étape (i) avec un acide pour traitement, ayant un Pka inférieur au Pka de l'acide formique, pour réduire la quantité de composé formique à un niveau égal ou inférieur à 200 ppm en poids de composé formique par rapport au poids total de la particule.

2. Composition conforme à la revendication 1, dans laquelle le monomère oxyde d'alkylène est l'oxyde d'éthylène.

3. Composition conforme à la revendication 2, dans laquelle le polymère est produit par la polymérisation d'oxyde d'éthylène et d'un ou plusieurs oxydes d'alkylène autres que l'oxyde d'éthylène.

4. Composition conforme à n'importe laquelle des revendications précédentes, dans laquelle les particules sont sous une forme choisie parmi des poudres; des cachets, des pastilles, des granules et des extrudats.

5. Composition conforme à n'importe laquelle des revendications précédentes, dans laquelle les poudres ont une taille moyenne de particules de moins de 40 à 1000 microns.

6. Composition conforme à la revendication 1, dans laquelle les particules sont des extrudats ayant un diamètre moyen de 2 à 10 millimètres.

7. Composition conforme à n'importe laquelle des revendications précédentes, dans laquelle le polymère a une masse molaire moyenne en poids de 100.000 à 1.000.000 g/molécule gramme.

8. Composition conforme à la revendication 7, dans laquelle le polymère a une masse molaire moyenne en poids de 300.000 à 1.000.000 g/molécule gramme.

9. Composition conforme à n'importe laquelle des revendications précédentes, qui comprend environ de 10 à 150 ppm en poids de composé formique, par rapport au poids total de la particule.

10. Composition conforme à n'importe laquelle des revendications précédentes, dans laquelle l'acide est l'acide choisi parmi l'acide fluorhydrique, l'acide sulfurique, l'acide nitrique, l'acide thiosulfurique, l'acide phosphorique, l'acide citraconique, l'acide citrique, l'acide dichloroacétique, l'acide oxalique, l'acide méthanesulfonique, l'acide malonique et leurs mélanges.

11. Composition conforme à la revendication 10, dans laquelle l'acide est l'acide méthanesulfonique.

12. Composition conforme à n'importe laquelle des revendications précédentes, dans laquelle le traitement acide est effectué en formant une dispersion de particules de polymère dans un milieu liquide comprenant l'acide du traitement dans des conditions efficaces pour favoriser l'extraction du composé formique de la particule de polymère ; et (ii) récupération d'une particule de polymère particulaire ayant une teneur réduite en composé formique.

13. Composition conforme à la revendication 10, dans laquelle le traitement acide est effectué en appliquant une quantité suffisante d'acide pour le traitement, sur la surface de la particule de polymère, pour favoriser le remplacement du composé formique, sur la surface, par l'acide du traitement ; et (ii) élimination du composé formique remplacé, de la particule.
